# FASCICULE DE BREVET EUROPEEN

(11) **EP 3 917 799 B1**
(45) Date de publication et mention de la délivrance du brevet: **27.11.2024**
(21) Numéro de dépôt: 20771574.9
(22) Date de dépôt: 17.09.2020
(51) Int. Cl.: B60L 53/62, B60L 53/63, H02M 3/335, B60L 53/10, B60L 53/31, H02J 7/02, H02J 3/14, B60L 53/60, H02J 7/34, H02J 7/00, H02M 1/10, H02J 3/32

(54) **DISPOSITIF DE RECHARCHE RAPIDE D'UN VEHICULE AUTOMOBILE**
SCHNELLLADEVORRICHTUNG FÜR EIN KRAFTFAHRZEUG
RAPID CHARGING DEVICE FOR A MOTOR VEHICLE

(30) Priorité: 11.10.2019 FR 1911313
(43) Date de publication de la demande: 08.12.2021
(73) Titulaire: NW Joules, 75007 Paris (FR)
(72) Inventeur: KERDELHUE, Jean-Christophe, 75007 Paris (FR)
(74) Mandataire: Cabinet Laurent & Charras
(86) Numéro de dépôt international: PCT/EP2020/076059
(87) Numéro de publication internationale: WO 2021/069188

(56) Documents cités:
- WO-A1-2019/193195
- DE-A1- 102017 207 102
- DE-A1- 102017 207 102
- JP-B1- 6 548 854
- US-A1- 2012 280 655
- US-A1- 2012 280 655
- US-A1- 2016 178 678
- US-A1- 2016 178 678
- US-A1- 2018 358 839
- US-A1- 2018 358 839
- US-A1- 2019 157 869
- US-A1- 2019 157 869

## Description

### Domaine Technique

L'invention concerne le domaine des dispositifs de recharge de véhicules automobiles, tels qu'une voiture ou un bus électrique ou hybride. Ces dispositifs de recharge sont également appelés « bornes de recharge » et peuvent être implantés dans divers endroits, tels que les parkings privés, les parkings publics de magasins ou de restaurants par exemple.

L'invention vise plus particulièrement une borne de recharge dite « rapide ».

### Art antérieur

Le développement des véhicules électriques ou hybrides s'accompagne naturellement d'un développement des solutions de recharge de ces véhicules. Un des points bloquant le développement de l'usage des véhicules uniquement électriques est le temps de recharge de ces véhicules. En effet, ce temps de recharge est bien supérieur à celui nécessaire pour faire le plein de carburant d'un véhicule thermique. Ainsi, pour parcourir des longues distances, un conducteur utilise plus facilement un véhicule thermique ou hybride qu'un véhicule uniquement électrique.

La recharge d'un véhicule électrique (ou hybride) est réalisée en rechargeant une ou plusieurs batteries connectées sur le réseau électrique du véhicule. Pour ce faire, l'énergie électrique est classiquement consommée sur un réseau électrique présentant une tension alternative. La borne de recharge a pour fonction de transformer la tension alternative du réseau à un niveau de tension adapté à la batterie et de transformer la tension alternative en une tension continue.

Une borne de recharge classique est connectée à un réseau électrique fonctionnant en 220V alternatif et elle comporte une entrée de réseau connectée à un transformateur abaissant la tension alternative à un niveau de l'ordre de 50V relié à un convertisseur alternatif/continu connecté à une prise de charge du véhicule électrique.

Avec ce type de bornes de recharge largement démocratisées, une recharge complète d'un véhicule électrique prend typiquement 8 à 12 heures.

Cependant, le soutirage réalisé par plusieurs bornes de recharge sur un réseau peut entraîner des dégradations au niveau des performances du réseau. En effet, dans un réseau électrique, la consommation doit toujours être équilibrée avec la production au risque de faire varier les caractéristiques du réseau, notamment sa fréquence. Pour ce faire, le gestionnaire du réseau peut utiliser des réserves primaires, secondaires et tertiaires, qui interviennent à des échelles de temps et de puissance différentes. Par exemple, la réserve primaire présente un délai d'action inférieur à 30 secondes, la réserve secondaire présente un délai d'action inférieur à 15 min et la réserve tertiaire présente un délai d'action de 30 min.

Ainsi, lorsqu'un déséquilibre est constaté, les réserves primaires s'activent automatiquement en fonction des écarts de fréquence mesurés entre le réseau et un signal de référence élaboré par le gestionnaire de réseau de transport. En effet, lorsqu'un déséquilibre se produit entre la production et la consommation, la fréquence du réseau s'écarte du niveau requis de 50 Hz et cet écart active la réserve primaire des entités participant à cette réserve primaire. Chacune de ces entités doit augmenter sa puissance d'injection si la fréquence est inférieure à 50 Hz ou diminuer sa puissance d'injection voire soutirer du courant, si la fréquence est supérieure à 50 Hz. Un nouveau point d'équilibre entre la production et la consommation est ainsi obtenu sur le réseau.

Pour obtenir la réactivité nécessaire, la réserve primaire comporte des entités de réserve connectées sur le réseau haute tension ou le réseau moyenne tension. En effet, un réseau de transport d'énergie électrique est classiquement structuré avec plusieurs niveaux de tension, par exemple des lignes haute-tension transportent le courant avec une tension entre 50kV et 400kV, des lignes moyenne-tension avec une tension entre 1kV et 50kV et des lignes basse-tension avec une tension de 220V. Ces lignes sont interconnectées avec des postes de transformation disposés entre les différents types de lignes.

Un équipement utilisant des batteries pour participer en tant qu'entité de réserve à la réserve primaire comporte classiquement un ensemble de batteries de très forte capacité chargées à moitié de leur capacité pour pourvoir, le cas échéant, injecter ou soutirer de la puissance sur le réseau. De même, cet équipement participe au réglage de tension suivant le cahier des charges du gestionnaire de réseau, en injectant ou soutirant de la puissance réactive.

La réserve primaire doit être dimensionnée pour injecter ou restituer une part non négligeable de la production et de la consommation du réseau. En Europe, l'ensemble des entités de réserve formant la réserve primaire représentent une capacité de 3000MW, soit la puissance de production des deux plus gros réacteurs nucléaires en service. Pour obtenir cette puissance totale, chaque entité de réserve doit être dimensionnée pour présenter une capacité d'au moins 1 MW.

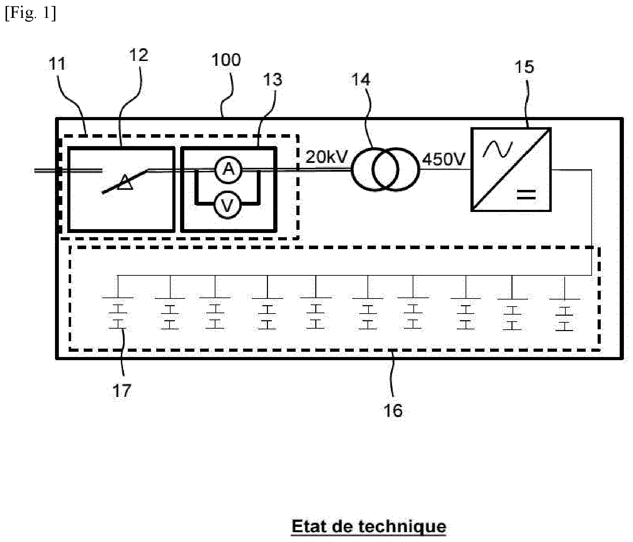

Plus précisément, tel qu'illustré sur la figure 1, un équipement d'équilibrage **100** à batteries **17** comporte une entrée de réseau **11** intégrant des organes de protection **12** du réseau haute-tension ou moyenne-tension et des organes de mesure **13** des performances du réseau pour détecter les besoins d'équilibrage en puissance et en tension. Cette entrée de réseau est connectée à un transformateur **14** abaissant la tension. Par exemple, lorsque l'équipement d'équilibrage est connecté sur le réseau moyenne-tension, le transformateur peut être configuré pour transformer une tension alternative de 20kV en une tension alternative de 450V. La sortie du transformateur **14** est connectée à un onduleur **15** configuré pour convertir la tension alternative en une tension continue alimentant un réseau **16** de batteries **17.** Un organe de supervision, non représenté, mesure les puissances active et réactive du réseau au cours du temps et commande la charge ou la décharge des batteries **17** pour compenser les déséquilibres du réseau.

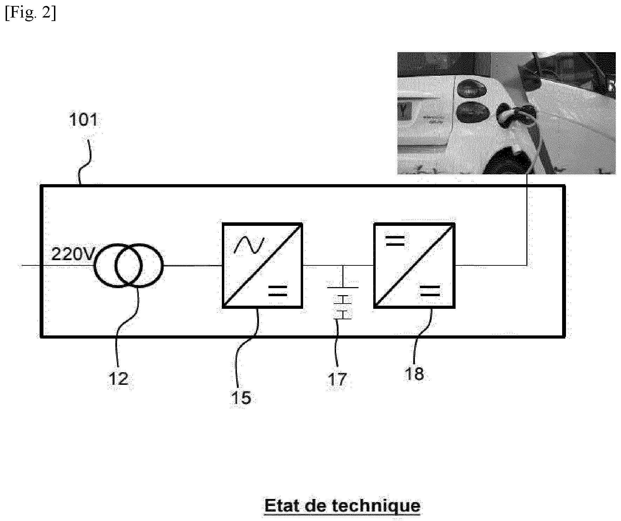

Pour limiter la puissance souscrite de raccordement de l'équipement au réseau, il est également connu des bornes de recharges **101** pour véhicules électriques intégrant une ou plusieurs batteries, tel qu'illustré sur la figure 2. Ce type de borne de recharge **101** intègre un transformateur **12** abaissant la tension alternative du réseau basse-tension suivi d'un convertisseur alternatif/continu **15** connecté à une batterie **17** et configuré pour adapter le niveau de tension à la batterie **17.**

La sortie du convertisseur alternatif/continu **15** est également connectée à un second convertisseur continu/continu **18** connecté à une prise de charge du véhicule électrique et configuré pour adapter le niveau de tension au véhicule électrique. Lorsque la demande de puissance dépasse une valeur seuil, la batterie **17** est utilisée de sorte à limiter les contraintes qui seraient imposées au réseau.

En outre, la batterie **17** peut être rechargée après la phase de charge d'un véhicule électrique. Bien que ce mode de réalisation limite la puissance instantanée soutirée sur le réseau, le temps de recharge n'est pas amélioré par rapport à une borne de recharge classique.

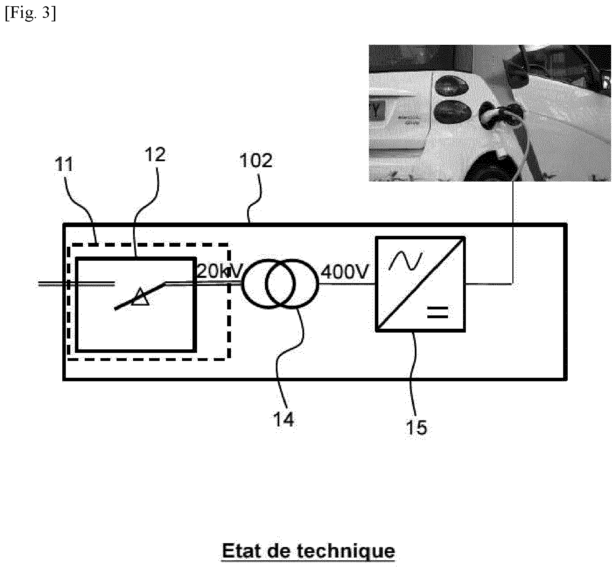

Pour améliorer la vitesse de recharge, il est possible d'utiliser une borne de recharge directement connectée sur le réseau haute-tension ou sur le réseau moyenne-tension de sorte à pouvoir fournir une puissance maximale au véhicule électrique. Tel qu'illustré sur la figure 3, ce type de borne de recharge **102** intègre une entrée de réseau **11** intégrant des organes de protection **12** du réseau haute-tension ou moyenne-tension et un transformateur **14** abaissant la tension.

La sortie du transformateur **14** est connectée à un onduleur **15** configuré pour convertir la tension alternative en une tension continue alimentant la prise de recharge du véhicule électrique. Avec ce type de borne de recharge, la recharge d'un véhicule électrique peut être réalisée en 20 min.

Bien que cette solution soit efficace pour améliorer la vitesse de recharge d'un véhicule électrique, l'encombrement et le coût des organes de protection **12** nécessaires pour être autorisé à se raccorder sur le réseau haute-tension ou moyenne-tension sont prohibitifs pour le déploiement de ce type de bornes de recharge.

Il est également possible d'utiliser un système de management de batteries pour régler la tension sur le bus connecté à l'ensemble des batteries d'une borne de recharge ou d'un dispositif d'équilibrage, tel que décrit dans le document US 2018/035839. Cette stratégie de gestion de l'ensemble des batteries est simple à mettre à oeuvre mais elle pose des problèmes techniques, notamment lorsque la société qui exploite l'équilibrage du réseau est différente de la société qui exploite les bornes de recharge.

Le problème technique de l'invention consiste donc à obtenir une borne de recharge rapide qui surmonte les inconvénients des dispositifs précédemment décrits.

### Exposé de l'invention

Pour répondre à ce problème technique, l'invention propose de modifier un équipement d'équilibrage formant une partie de la réserve primaire ou secondaire pour réaliser, en plus de la fonction d'équilibrage du réseau, une fonction de recharge d'un véhicule électrique ou hybride. Ainsi, les organes de de protection nécessaires pour être autorisé à se raccorder sur le réseau haute-tension ou moyenne-tension sont communs pour l'équipement d'équilibrage et la borne de recharge, ce qui limite le nombre de composants nécessaires à l'installation de la borne de recharge.

Pour ce faire, un convertisseur de tension est connecté sur la tension continue alimentant le réseau de batteries de l'équipement d'équilibrage pour alimenter la prise de recharge du véhicule électrique avec le niveau de tension requis.

A cet effet, selon un premier aspect, l'invention concerne un équipement d'équilibrage d'un réseau haute-tension ou moyenne-tension tel que défini par la revendication 1 comportant :
- une entrée de réseau intégrant des organes de protection dudit réseau et des organes de mesure des performances dudit réseau pour détecter les besoins d'équilibrage ;
- un transformateur comportant un premier enroulement connecté en sortie de ladite entrée de réseau et configuré pour abaisser la tension dudit réseau ;
- un onduleur connecté sur un second enroulement dudit transformateur et configuré pour transformer une tension alternative en une tension continue ;
- un ensemble de batteries connectées sur ladite tension continue ;
- un organe de supervision configuré pour activer ledit onduleur et assurer la charge ou la décharge desdites batteries lorsqu'un déséquilibre est mesuré sur ledit réseau par lesdits organes de mesure ; et
- un convertisseur de tension connecté en entrée sur ladite tension continue dudit ensemble de batteries.

L'invention se caractérise en ce que ledit équipement d'équilibrage comporte également des moyens de détection d'un besoin de charge de ladite prise de recharge ; ledit organe de supervision étant configuré pour activer ledit convertisseur de tension lorsqu'un besoin de charge est détecté sur ladite prise de recharge et que les besoins d'injection sur le réseau sont inférieurs à une valeur seuil. En outre, lesdits moyens de détection d'un besoin de charge de ladite prise de recharge correspondent à une sonde de mesure de la puissance de recharge demandée sur ladite prise de recharge; et ledit équipement d'équilibrage comporte une sonde disposée entre ledit convertisseur de tension et ladite tension continue dudit ensemble de batteries de sorte à mesurer une puissance instantanée consommée par ladite prise de recharge, et une sonde disposée sur ladite tension continue dudit ensemble de batteries de sorte à mesurer une puissance instantanée consommée par ledit ensemble de batteries.

Ainsi, l'invention propose d'utiliser un équipement d'équilibrage pour recharger un véhicule électrique ou hybride sauf dans les phases pour lesquelles une grande quantité de puissance doit être injectée sur le réseau. En effet, dans un équipement d'équilibrage, les phases d'injection et de soutirage sont normalement relativement courtes, souvent quelques dizaines de secondes. Comparativement au temps de recharge d'un véhicule électrique ou hybride, ces instants de soutirage ou d'injection sont très faibles.

Contrairement à une borne de recharge classique, la borne de recharge réalisée par l'invention est beaucoup plus rapide, puisqu'elle est connectée sur le réseau haute-tension ou moyenne-tension. Ainsi, bien qu'elle ne soit pas disponible tout le temps, car la borne de recharge réalisée par l'invention n'est pas utilisable lorsque l'équipement d'équilibrage doit injecter une grande quantité de puissance sur le réseau, l'amélioration de la vitesse de recharge au cours des autres phases compense largement les instants dans lesquels la borne de recharge ne peut pas être utilisée pour charger un véhicule électrique ou hybride.

En outre, comparée à une borne de recharge rapide de l'état de la technique, le coût d'installation de la borne de recharge de l'invention est moindre puisque les organes de de protection nécessaires pour être autorisé à se raccorder sur le réseau haute-tension ou moyenne-tension sont communs pour l'équipement d'équilibrage et la borne de recharge ce qui limite le nombre de composants nécessaires à l'installation de la borne de recharge.

L'invention est donc issue d'une découverte selon laquelle l'indisponibilité de la borne de recharge dans les instants de forte injection d'un équipement d'équilibrage est compensée par le gain en vitesse de recharge et ne dégrade pas de manière notable la durée de vie des batteries intégrées dans les véhicules électriques ou hybrides.

En effet, il est connu que les coupures dans les phases de charge dégradent la durée de vie des batteries intégrées dans les véhicules électriques ou hybrides. Or, il a été mesuré une durée de vie sensiblement constante pour des batteries Lithium-ion intégrées dans les véhicules électriques ou hybrides même en utilisant une borne de recharge conforme à l'invention, c'est-à-dire avec des instants d'indisponibilité pouvant intervenir dans les phases de charge.

Selon un mode de réalisation, lesdits organes de mesure des performances dudit réseau pour détecter les besoins d'équilibrage comportent un compteur d'énergie dédié au gestionnaire dudit réseau et un compteur d'énergie indépendant. Le compteur dédié au gestionnaire de réseau permet classiquement, dans un équipement d'équilibrage, de permettre au gestionnaire de réseau de vérifier que l'équipement d'équilibrage est actif selon le contrat imposé par le gestionnaire de réseau. Par exemple, le gestionnaire de réseau peut avoir imposé comme contrainte que l'équipement d'équilibrage effectue un soutirage de 10% de puissance active lorsque la fréquence dépasse une valeur seuil ou tout autre mode de prévention du réseau et, de même, un soutirage de 10% de puissance réactive lorsque la tension dépasse une valeur seuil ou tout autre mode de prévention du réseau. Le compteur indépendant permet de vérifier la réalisation du contrat par le prestataire. En outre, dans le cadre de l'invention, le compteur indépendant peut être utilisé pour mesurer la puissance soutirée sur le réseau pour alimenter la borne de recharge et non pour équilibrer le réseau.

Pour mettre en oeuvre l'invention, il est nécessaire de configurer l'organe de supervision pour permettre l'injection et le soutirage sur le réseau tout en utilisant le même réseau pour alimenter le convertisseur de tension dans les phases pour lesquelles l'injection maximum n'est pas nécessaire. Pour ce faire, la méthode la plus simple est d'autoriser le fonctionnement du convertisseur de tension lorsque la prise de recharge est utilisée et que l'injection maximum sur le réseau n'est pas requise. Dans ce mode de réalisation, lesdits moyens de détection d'un besoin de charge de ladite prise de recharge correspondent à un capteur configuré pour détecter une consommation sur ladite prise de recharge.

De préférence, la commande de l'onduleur et du convertisseur de tension peut dépendre à la fois des besoins d'équilibrage du réseau et des besoins de soutirage de la borne de recharge. Ainsi, un compromis peut être recherché entre ces deux besoins lorsque les besoins d'injection sur le réseau ne sont pas maximaux.

Avec ces trois sondes, l'organe de supervision est capable de détecter la puissance utilisée sur l'onduleur et le convertisseur de tension pour équilibrer le soutirage réalisé sur le réseau en fonction des besoins de soutirage pour alimenter la prise de recharge et pour maintenir l'ensemble des batteries au point d'équilibre correspondant sensiblement à la moitié de la capacité totale de chacune des batteries.

Pour ce faire, selon un second aspect, l'invention concerne un procédé de gestion d'un équipement d'équilibrage selon le premier aspect de l'invention, tel que défini par la revendication 4, ledit procédé comportant les étapes suivantes :
- mesure de la différence entre une mesure de tension, une mesure de fréquence et une mesure de courant du réseau et des valeurs nominales pour déterminer les besoins d'injection et/ou de soutirage de puissance active et/ou réactive ;
- détermination d'une puissance de commande de l'onduleur connecté à l'ensemble des batteries en fonction des besoins d'injection et/ou de soutirage ;
- si les besoins d'injection sont supérieurs à une puissance maximum d'injection, désactivation du convertisseur de tension et activation de l'onduleur connecté à l'ensemble de batteries pour injecter ladite puissance maximum d'injection,
- si les besoins d'injection sont inférieurs à une puissance maximum d'injection, désactivation du convertisseur de tension et activation de l'onduleur connecté à l'ensemble de batteries pour injecter ladite puissance de commande,
- si les besoins de soutirage sont inférieurs à une puissance de recharge demandée sur ladite prise de recharge et que le niveau de charge de l'ensemble des batteries est supérieur à une valeur seuil, désactivation de l'onduleur connecté à l'ensemble de batteries et activation du convertisseur de tension pour soutirer ladite puissance de commande, et
- si les besoins de soutirage sont supérieurs à une puissance de recharge demandée sur ladite prise de recharge et que le niveau de charge de l'ensemble des batteries est inférieur à une valeur seuil, activation de l'onduleur et du convertisseur de tension jusqu'à ce que le niveau de charge de l'ensemble des batteries soit supérieur à ladite valeur seuil.

De préférence, ladite puissance de commande est déterminée en fonction de pertes de charge estimées à partir de mesures issues de trois sondes respectivement disposées en sortie dudit onduleur, entre ledit convertisseur de tension et ladite tension continue et sur ladite tension continue dudit ensemble de batteries.

### Description sommaire des figures

La manière de réaliser l'invention ainsi que les avantages qui en découlent, ressortiront bien des modes de réalisation qui suivent, donnés à titre indicatif mais non limitatif, à l'appui des figures 1 à 5 qui constituent :
[Fig. 1] La figure 1 est une représentation schématique d'un équipement d'équilibrage à batteries de l'état de la technique ;
[Fig. 2] La figure 2 est une représentation schématique d'une borne de recharge à batterie de l'état de la technique ;
[Fig. 3] La figure 3 est une représentation schématique d'une borne de recharge « rapide » de l'état de la technique ;
[Fig. 4] La figure 4 est une représentation schématique d'un équipement d'équilibrage selon un mode de réalisation de l'invention ; et
[Fig. 5] La figure 5 est un ordinogramme des étapes de gestion d'un organe de supervision de l'équipement d'équilibrage de la figure 4.

### Description détaillée de l'invention

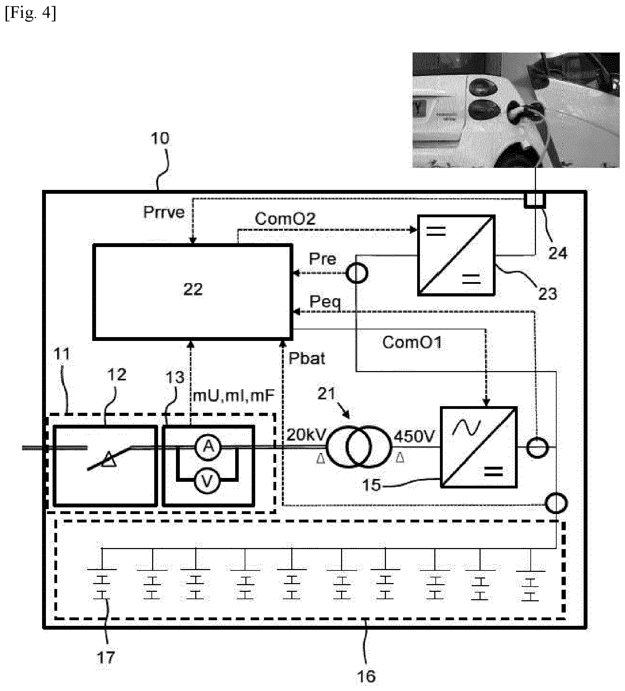

La figure 4 illustre un équipement d'équilibrage **10** formant également une borne de recharge pour un véhicule électrique ou hybride. Cet équipement d'équilibrage **10** comporte classiquement une entrée de réseau **11** intégrant des organes de protection **12** et des organes de mesure **13.** L'entrée de réseau **11** peut être connectée au réseau haute-tension ou moyenne-tension. Par exemple, l'entrée de réseau **11** peut être connectée à deux câbles électriques distincts transportant chacun une tension de 20 kV.

En outre, l'entrée de réseau **11** peut également comprendre une sortie de réseau permettant à un des deux câbles de traverser l'entrée de réseau **11** de sorte à former un équipement d'équilibrage traversé par le réseau.

Les organes de protection **12** correspondent typiquement à des disjoncteurs haute-tension ou moyenne-tension, par exemple des disjoncteurs commandés pouvant sectionner un courant de 400 A afin de protéger l'équipement d'équilibrage **10**. De préférence, les câbles réseaux entrent dans l'entrée de réseaux **11** sur des disjoncteurs manuels permettant de réaliser des opérations de maintenance dans l'équipement d'équilibrage **10**. Un disjoncteur automatique est préférentiellement monté à la sortie de ces disjoncteurs manuels de sorte à sectionner le courant traversant l'entrée de réseaux **11** lorsque les appels de courant à l'intérieur de l'équipement d'équilibrage **10** sont supérieurs à une valeur seuil. Ainsi, ces organes de protection **12** sont préférentiellement couplés avec des organes de mesure **13** de sorte à détecter les instants pour lesquels il convient de sectionner le courant traversant l'entrée de réseaux **11**.

Ces organes de mesure **13** ont également pour fonction de mesurer la fréquence, la tension ainsi que le déphasage entre l'intensité et cette tension, le tout afin de de détecter les besoins d'équilibrage du réseau en puissance active et réactive. De préférence, ces organes de mesure **13** intègrent plusieurs compteurs d'énergie : un compteur d'énergie associé au gestionnaire de réseau et un compteur d'énergie indépendant associé à l'exploitant de l'équipement d'équilibrage **10**. Ces compteurs d'énergie sont préférentiellement connectés à un réseau de communication filaire ou sans fil.

Ainsi, le gestionnaire du réseau peut obtenir des informations concernant les besoins d'équilibrage en temps réel en utilisant les mesures réalisées par les organes de mesure **13** de l'équipement d'équilibrage **10**. De même, les mesures réalisées par le compteur d'énergie indépendant peuvent être transmises à l'exploitant de l'équipement d'équilibrage **10** pour contrôler la quantité d'énergie injectée ou soutirée sur le réseau. Les organes de mesure **13** transmettent au moins trois informations à un organe de supervision **22** : une mesure de tension **mU**, une mesure de fréquence **mF** et une mesure de courant **mI**, l'organe de supervision **22** étant configuré pour calculer le déphasage entre le courant et la tension.

En variante, les organes de mesure **13** peuvent comporter des moyens de détection automatique du déphasage entre la tension et le courant et ce déphasage peut être transmis à l'organe de supervision **22**.

L'organe de supervision **22** a pour fonction première d'identifier les besoins d'équilibrage du réseau **ΔU**, **ΔF** et **ΔI** et de combler ces besoins en fonction de l'état de charge des batteries **17** intégrées dans l'équipement d'équilibrage **10.** Cet organe de supervision **22** peut se présenter sous la forme d'un microcontrôleur ou d'un microprocesseur associé à une suite d'instructions. De plus, cet organe de supervision **22** peut être contrôlé à distance, par exemple par l'exploitant de l'équipement d'équilibrage **10** afin de mettre à jour les stratégies d'équilibrage ou les autorisations de recharge des véhicules électriques ou hybrides.

Pour réaliser l'équilibrage ou la recharge d'un véhicule électrique ou hybride, la sortie de l'entrée de réseau **11** est connectée sur un transformateur **21** comportant trois enroulements. Le premier enroulement et préférentiellement câblé en triangle et reçoit la tension de 20 kV du réseau. Ce premier enroulement est couplé à un second enroulement préférentiellement également câblé en triangle avec une tension abaissée à 450 V.

Cette tension alternative abaissée est connectée à un onduleur **15** permettant de transformer cette tension alternative en une tension continue alimentant l'ensemble **16** des batteries **17.** De préférence, la sortie de l'onduleur **15** présent un niveau de tension continu compris entre 700 et 1000 volts.

En outre, cette tension continue alimentant l'ensemble **16** des batteries **17** est également connectée à un convertisseur de tension **23.** Ce convertisseur de tension reçoit une tension continu comprise entre 700 et 1000 volts et la transforme en une tension continue adaptée pour recharger un véhicule automobile, par exemple 50 V. Ainsi, la sortie du convertisseur de tension **23** est connectée à une prise de recharge d'un véhicule électrique ou hybride **24.** Bien entendu, les niveaux de tension au niveau de l'entrée de réseau **11,** du transformateur **21** et des onduleurs **15, 23** peuvent varier sans changer l'invention.

Outre ces éléments essentiels à la réalisation de l'invention, d'autres éléments peuvent être mis en oeuvre pour améliorer la sécurité ou les stratégies de commande de l'équipement d'équilibrage **10.** Par exemple, la figure 4 illustre des sondes disposées après l'onduleur **15** pour mesurer la puissance en différents points de l'équipement d'équilibrage **10.** Plus précisément, une sonde est disposée en sortie de l'onduleur **15** pour mesurer la puissance totale **Peq,** consommée par les deux charges que sont l'ensemble des batteries **17** et la prise de recharge **24** après les pertes liées au transformateur **21** et à l'onduleur **15.** Une sonde est disposée sur la tension continue de l'ensemble de batteries **17** pour mesurer la puissance **Pbat** consommée uniquement par l'ensemble de batteries **17** et une sonde est disposée entre la tension continue de l'ensemble de batteries **17** et le convertisseur de tension **23** pour mesurer la puissance uniquement consommée par la prise de recharge **24**.

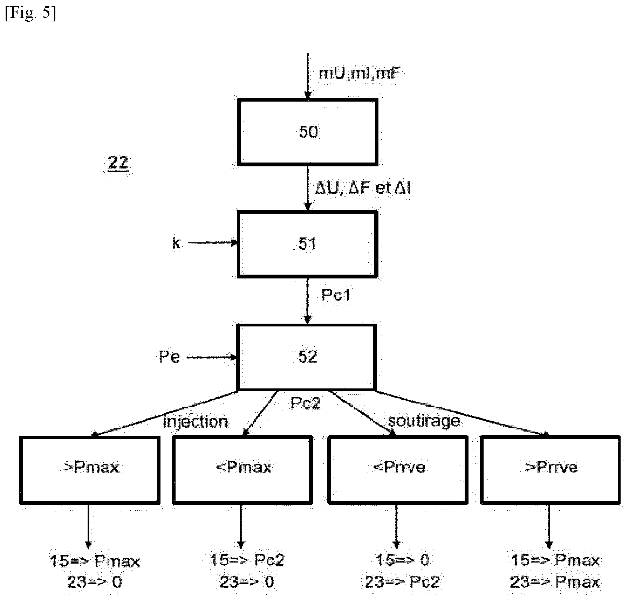

De préférence, tel qu'illustré sur la figure 5, la puissance de recharge demandée **Prrve** par la prise de recharge **24** est également mesurée par une sonde disposée au niveau de la prise de recharge **2**4 afin de fournir une information à l'organe de supervision **22**.

À partir de ces différentes informations transmises à l'organe de supervision **22,** l'organe de supervision **22** peut déterminer la stratégie à opérer par l'onduleur **15** et le convertisseur de tension **23**.

Outre ces éléments structurels permettant de recharger un véhicule électrique ou hybride et d'effectuer l'équilibrage du réseau, les équipements d'équilibrage **10** peuvent intégrer des éléments classiques d'un équipement d'équilibrage, tels qu'un groupe froid permettant le refroidissement du transformateur **21** ou de l'ensemble des batteries **17**, une alarme, une centrale de protection contre les incendies...

La figure 5 illustre un exemple de procédé de gestion de l'onduleur **15** et du convertisseur de tension **23** mis en oeuvre par l'organe de supervision **22**. Dans une première étape **50,** ce procédé mesure la différence entre la tension **mU**, la fréquence **mF** et le courant **mI** et des valeurs nominales pour détecter les besoins **ΔU**, **ΔI**, **ΔF** d'injection ou de soutirage sur le réseau de puissance réactive et/ou active.

Ainsi, lorsque la différence entre une grandeur nominale et grandeur mesurée **mU**, **mF**, **mI** dépasse une valeur seuil, un besoin d'injection ou de soutirage est déterminé en fonction de cette différence. La seconde étape **51** vise à déterminer la puissance à appliquer à l'onduleur **15** en fonction des besoins **Pc1** d'injection ou de soutirage et d'un coefficient **k**. Ces besoins **Pc1** sont ensuite précisés dans une seconde étape **52** de détermination en prenant en compte les pertes réelles au niveau du transformateur **21**. Ces pertes réelles peuvent être estimées par les différentes sondes en fonction de l'état de l'onduleur **15** et du convertisseur de tension **23**.

Les besoins **Pc2** obtenus à l'issue de l'étape **52** peuvent être appliqués en fonction de plusieurs scénarii prédéfinis, par exemple :
- si les besoins d'injection **ΔU**, **ΔF**, **ΔI** sont supérieurs à une puissance maximum d'injection **Pmax,** désactivation du convertisseur de tension **23** et activation de l'onduleur **15** connecté à l'ensemble de batteries **17** pour injecter la puissance maximum d'injection **Pmax,**
- si les besoins d'injection **ΔU, ΔF, ΔI** sont inférieurs à une puissance maximum d'injection **Pmax,** désactivation du convertisseur de tension **23** et activation de l'onduleur **15** connecté à l'ensemble de batteries **17** pour injecter la puissance de commande **Pc1** ou **Pc2**,
- si les besoins de soutirage **ΔU**, **ΔF**, **ΔI** sont inférieurs à une puissance de recharge demandée **Prrve** sur la prise de recharge **24** et que le niveau de charge de l'ensemble des batteries **17** est supérieur à une valeur seuil, désactivation de l'onduleur **15** connecté à l'ensemble de batteries **17** et activation du convertisseur de tension **23** pour soutirer la puissance de commande **Pc1** ou **Pc2**, et
- si les besoins de soutirage **ΔU**, **ΔF**, **ΔI** sont supérieurs à une puissance de recharge demandée **Prrve** sur la prise de recharge **24** et que le niveau de charge de l'ensemble des batteries **17** est inférieur à une valeur seuil, activation de l'onduleur **15** et du convertisseur de tension **23** jusqu'à ce que le niveau de charge de l'ensemble des batteries **17** soit supérieur à la valeur seuil.

L'invention permet ainsi d'obtenir un équipement d'équilibrage **10** permettant, outre l'équilibrage du réseau, de recharger un véhicule électrique ou hybride de manière très rapide puisque l'équipement d'équilibrage est directement connecté sur le réseau haute-tension ou moyenne tension.

L'invention permet donc d'obtenir une borne de recharge « rapide » à moindre coût car elle réutilise les composants existants dans l'équipement d'équilibrage **10,** notamment au niveau de l'entrée de réseau **11.**

## Revendications

1. Equipement d'équilibrage (10) d'un réseau haute-tension ou moyenne-tension comportant :
- une entrée de réseau (11) intégrant des organes de protection (12) dudit réseau et des organes de mesure (13) des performances dudit réseau pour détecter les besoins d'équilibrage, c'est-à-dire les besoins d'injection ou de soutirage pour combler un déséquilibre sur ledit réseau haute-tension ou moyenne-tension ;
- un transformateur (21) comportant un premier enroulement connecté en sortie de ladite entrée de réseau (11) et configuré pour abaisser la tension dudit réseau ;
- un onduleur (15) connecté sur un second enroulement dudit transformateur (14) et configuré pour transformer une tension alternative en une tension continue ;
- un ensemble de batteries (17) connectées sur ladite tension continue ;
- un organe de supervision (22) configuré pour activer ledit onduleur (15) et assurer la charge ou la décharge desdites batteries (17) lorsqu'un déséquilibre est mesuré sur ledit réseau par lesdits organes de mesure (13) ; et
- un convertisseur de tension (23) connecté en entrée sur ladite tension continue dudit ensemble de batteries (17) et en sortie sur au moins une prise de recharge (24) d'un véhicule électrique ou hybride
***caractérisé en ce que*** ledit équipement d'équilibrage (10) comporte également des moyens de détection d'un besoin de charge de ladite prise de recharge (24) ;
ledit organe de supervision (22) étant configuré pour activer ledit convertisseur de tension (23) lorsqu'un besoin de charge est détecté sur ladite prise de recharge (24) et que les besoins d'injection sur le réseau sont inférieurs à une valeur seuil ;
lesdits moyens de détection d'un besoin de charge de ladite prise de recharge (24) correspondant à une sonde de mesure de la puissance de recharge demandée (Prrve) sur ladite prise de recharge (24) ; et
ledit équipement d'équilibrage (10) comportant une sonde disposée entre ledit convertisseur de tension (23) et ladite tension continue dudit ensemble de batteries (17) de sorte à mesurer une puissance instantanée (Pre) consommée par ladite prise de recharge (24), et une sonde disposée sur ladite tension continue dudit ensemble de batteries (17) de sorte à mesurer une puissance instantanée (Pbat) consommée par ledit ensemble de batteries (17).

2. Equipement d'équilibrage selon la revendication 1, ***dans lequel*** lesdits organes de mesure (13) des performances dudit réseau pour détecter les besoins d'équilibrage comportent un compteur d'énergie dédié au gestionnaire dudit réseau et un compteur d'énergie indépendant.

3. Equipement d'équilibrage selon l'une des revendications 1 à 2, ***dans lequel*** ledit équipement d'équilibrage (10) comporte une sonde disposée en sortie dudit onduleur (15) de sorte à mesurer une puissance instantanée (Peq) consommée par ladite prise de recharge (24) et ledit ensemble de batteries (17).

4. Procédé de gestion d'un équipement d'équilibrage selon l'une des revendications 1 à 3, ledit procédé comportant les étapes suivantes :
- mesure (50) de la différence entre une mesure de tension (mU), une mesure de fréquence (mF) et une mesure de courant (mI) du réseau et des valeurs nominales pour déterminer les besoins d'injection et/ou de soutirage (ΔU, ΔF, ΔI) ;
- détermination (51, 52) d'une puissance de commande (Pc1, Pc2) du convertisseur de tension (15) connecté à l'ensemble des batteries (17) en fonction des besoins d'injection et/ou de soutirage (ΔT, ΔF, ΔC) de puissance active et/ou réactive ;
- si les besoins d'injection (ΔT, ΔF, ΔC) sont supérieurs à une puissance maximum d'injection (Pmax), désactivation du convertisseur de tension (23) et activation de l'onduleur (15) connecté à l'ensemble de batteries (17) pour injecter ladite puissance maximum d'injection (Pmax),
- si les besoins d'injection (ΔT, ΔF, ΔC) sont inférieurs à une puissance maximum d'injection (Pmax), désactivation du convertisseur de tension (23) et activation de l'onduleur (15) connecté à l'ensemble de batteries (17) pour injecter ladite puissance de commande (Pc1, Pc2),
- si les besoins de soutirage (ΔT, ΔF, ΔC) sont inférieurs à une puissance de recharge demandée (Prrve) sur ladite prise de recharge (24) et que le niveau de charge de l'ensemble des batteries (17) est supérieur à une valeur seuil, désactivation de l'onduleur (15) connecté à l'ensemble de batteries (17) et activation du convertisseur de tension (23) pour soutirer ladite puissance de commande (Pc1, Pc2), et
- si les besoins de soutirage (ΔT, ΔF, ΔC) sont supérieurs à une puissance de recharge demandée (Prrve) sur ladite prise de recharge (24) et que le niveau de charge de l'ensemble des batteries (17) est inférieur à une valeur seuil, activation de l'onduleur (15) et du convertisseur de tension (23) jusqu'à ce que le niveau de charge de l'ensemble des batteries (17) soit supérieur à ladite valeur seuil.

5. Procédé de gestion selon la revendication 4, ***dans lequel*** ladite puissance de commande (Pc1, Pc2) est déterminée (52) en fonction de pertes de charge (Pe) estimées à partir de mesures (Peq, Pre, Pbat) issues de trois sondes respectivement disposées en sortie dudit onduleur (15), entre ledit convertisseur de tension (23) et ladite tension continue et sur ladite tension continue dudit ensemble de batteries (17).

## Patentansprüche

1. Anlage (10) zum Ausgleich eines Hochspannungs- oder Mittelspannungsnetzes, die Folgendes umfasst:
- einen Netzeingang (11) mit integrierten Schutzorganen (12) für das Netz und Messorganen (13) für die Leistung des Netzes, um den Ausgleichsbedarf zu ermitteln, d. h. den Bedarf an Einspeisung oder Entnahme, um ein Ungleichgewicht im Hochspannungs- oder Mittelspannungsnetz auszugleichen;
- einen Transformator (21) mit einer ersten Wicklung, die an den Ausgang des Netzeingangs (11) angeschlossen und so konfiguriert ist, dass sie die Spannung des Netzes senkt;
- einen Wechselrichter (15), der an eine zweite Wicklung des Transformators (14) angeschlossen und so konfiguriert ist, dass er eine Wechselspannung in eine Gleichspannung umwandelt;
- einen Batteriesatz (17), die an die Gleichspannung angeschlossen sind;
- ein Überwachungsorgan (22), das so konfiguriert ist, dass es den Wechselrichter (15) aktiviert und sicherstellt, dass die Batterien (17) geladen oder entladen werden, wenn ein Ungleichgewicht in dem Netz durch die Messorgane (13) gemessen wird; und
- einen Spannungswandler (23), der eingangsseitig mit der genannten Gleichspannung des genannten Batteriesatzes (17) und ausgangsseitig mit mindestens einer Ladebuchse (24) eines Elektro- oder Hybridfahrzeugs verbunden ist,
***dadurch gekennzeichnet,* dass** die Ausgleichsanlage (10) auch Mittel zur Feststellung eines Ladebedarfs der Ladebuchse (24) umfasst;
das Überwachungsorgan (22) so konfiguriert ist, dass es den Spannungswandler (23) aktiviert, wenn ein Ladebedarf an der Ladebuchse (24) festgestellt wird und der Bedarf an Einspeisung in das Netz unter einem Schwellenwerts liegt;
die Mittel zum Feststellen eines Ladebedarfs der Ladebuchse (24) einer Sonde zum Messen der geforderten Ladeleistung (Prrve) an der Ladebuchse (24) entsprechen; und
die Ausgleichsanlage (10) eine Sonde umfasst, die zwischen dem Spannungswandler (23) und der Gleichspannung des Batteriesatzes (17) angeordnet ist, um eine Momentanleistung (Pre) zu messen, die von der Ladebuchse (24) verbraucht ist, und eine Sonde, die an der Gleichspannung des Batteriesatzes (17) angeordnet ist, um eine Momentanleistung (Pbat) zu messen, die von dem Batteriesatz (17) verbraucht ist.

2. Ausgleichsanlage nach Anspruch 1, ***wobei*** die Organe (13) zur Messung der Leistung des Netzes zur Feststellung des Ausgleichsbedarfs einen Energiezähler für den Netzbetreiber und einen unabhängigen Energiezähler umfassen.

3. Ausgleichsanlage nach einem der Ansprüche 1 bis 2, ***wobei*** die Ausgleichsanlage (10) eine Sonde umfasst, die am Ausgang des Wechselrichters (15) angeordnet ist, um eine Momentanleistung (Peq) zu messen, die von der Ladebuchse (24) und dem Batteriesatz (17) verbraucht ist.

4. Verfahren zur Steuerung einer Ausgleichsanlage nach einem der Ansprüche 1 bis 3, wobei das Verfahren folgende Schritte umfasst:
- Messung (50) der Differenz zwischen einer Spannungsmessung (mU), einer Frequenzmessung (mF) und einer Strommessung (mI) des Netzes und der Nennwerte, um den Einspeise- und/oder Entnahmebedarf (ΔU, ΔF, ΔI) zu bestimmen;
- Bestimmung (51, 52) einer Steuerleistung (Pc1, Pc2) des Spannungswandlers (15), der an den Batteriesatz (17) angeschlossen ist, in Abhängigkeit vom Bedarf an Einspeisung und/oder Entnahme (ΔT, ΔF, ΔC) von Wirk- und/oder Blindleistung;
- wenn der Einspeisebedarf (ΔT, ΔF, ΔC) größer ist als eine maximale Einspeiseleistung (Pmax), Deaktivierung des Spannungswandlers (23) und Aktivierung des Wechselrichters (15), der mit dem Batteriesatz (17) verbunden ist, um die maximale Einspeiseleistung (Pmax) einzuspeisen,
- wenn der Einspeisebedarf (ΔT, ΔF, ΔC) geringer ist als eine maximale Einspeiseleistung (Pmax), Deaktivierung des Spannungswandlers (23) und Aktivierung des Wechselrichters (15), der mit dem Batteriesatz (17) verbunden ist, um die Steuerleistung (Pc1, Pc2) einzuspeisen,
- wenn der Entnahmebedarf (ΔT, ΔF, ΔC) geringer ist als eine geforderte Ladeleistung (Prrve) an der Ladebuchse (24) und der Ladezustand des Batteriesatzes (17) über einem Schwellenwert liegt, Deaktivierung des Wechselrichters (15), der mit dem Batteriesatz (17) verbunden ist, und Aktivierung des Spannungswandlers (23), um die Steuerleistung (Pc1, Pc2) zu entnehmen, und
- wenn der Entnahmebedarf (ΔT, ΔF, ΔC) größer ist als eine geforderte Ladeleistung (Prrve) an der Ladebuchse (24) und der Ladezustand des Batteriesatzes (17) unter einem Schwellenwert liegt, Aktivierung des Wechselrichters (15) und des Spannungswandlers (23), bis der Ladezustand des Batteriesatzes (17) über dem Schwellenwert liegt.

5. Steuerungsverfahren nach Anspruch 4, ***wobei*** die Steuerleistung (Pc1, Pc2) in Abhängigkeit von Ladeverlusten (Pe) bestimmt wird (52), die anhand von Messungen (Peq, Pre, Pbat) von drei Sonden berechnet werden, die jeweils am Ausgang des Wechselrichters (15), zwischen dem Spannungswandler (23) und der Gleichspannung und an der Gleichspannung des Batteriesatzes (17) angeordnet sind.

## Claims

1. A balancing system (10) of a high-voltage or medium-voltage network comprising:
- a network input (11) incorporating protection units (12) for protecting said network and units (13) for measuring the performance of said network in order to detect the balancing requirements;
- a transformer (21) having a first winding connected to the output of said network input (11) and configured to lower the voltage of said network;
- an inverter (15) connected to a second winding of said transformer (14) and configured to transform an AC voltage into a DC voltage;
- a set of batteries (17) connected to said DC voltage; and
- a supervision unit (22) configured to activate said inverter (15) and to charge or discharge said batteries (17) when an imbalance is measured on said network by said measurement units (13);
- a voltage converter (23) connected at the input to said direct voltage of said set of batteries (17) and at the output to at least one charging socket (24) of an electric or hybrid vehicle
***characterized in that*** said balancing system (10) also includes means for detecting a charging requirement of said charging socket (24);
said supervision unit (22) being configured to activate said voltage converter (23) when a charging requirement is detected at said charging socket (24) and the requirements for injection into the network are less than a threshold value;
said means for detecting a charging need of said charging socket (24) corresponding to a probe for measuring the requested charging power (Prrve) on said charging socket (24); and
said balancing equipment (10) comprising a probe disposed between said voltage converter (23) and said direct voltage of said set of batteries (17) to measure an instantaneous power (Pre) consumed by said charging socket (24), and a probe disposed on said direct voltage of said set of batteries (17) to measure an instantaneous power (Pbat) consumed by said set of batteries (17).

2. The balancing system according to claim 1, ***wherein*** said units for measuring (13) the performance of said network in order to detect the balancing requirements comprise a dedicated energy meter for the operator of said network and an independent energy meter.

3. Balancing equipment according to claim 1 or 2, **wherein** said balancing equipment (10) comprises a probe disposed at the output of said inverter (15) to measure an instantaneous power (Peq) consumed by said charging socket (24) and said set of batteries (17).

4. A method for managing a balancing system according to one of claims 1 to 3, said method comprising the following steps:
- measuring (50) the difference between a voltage measurement (mU), a frequency measurement (mF) and a current measurement (mI) of the network and nominal values in order to determine the injection and/or withdrawal requirements (ΔU, AF, ΔI);
- determining (51, 52) a control power (Pc1, Pc2) of the voltage converter (15) connected to the set of batteries (17) based upon the active and/or reactive power injection and/or withdrawal requirements (ΔT, ΔF, ΔC);
- if the injection requirements (ΔT, ΔF, ΔC) are greater than a maximum injection power (Pmax), deactivating the voltage converter (23) and activating the inverter (15) connected to the set of batteries (17) in order to inject said maximum injection power (Pmax),
- if the injection requirements (ΔT, ΔF, ΔC) are less than a maximum injection power (Pmax), deactivating the voltage converter (23) and activating the inverter (15) connected to the set of batteries (17) in order to inject said control power (Pc1, Pc2),
- if the withdrawal requirements (ΔT, ΔF, ΔC) are less than a requested charging power (Prrve) at said charging socket (24) and the charge level of the set of batteries (17) is greater than a threshold value, deactivating the inverter (15) connected to the set of batteries (17) and activating the voltage converter (23) in order to withdraw said control power (Pc1, Pc2), and
- if the withdrawal requirements (ΔT, ΔF, ΔC) are greater than a requested charging power (Prrve) at said charging socket (24) and the charge level of the set of batteries (17) is less than a threshold value, activating the inverter (15) and the voltage converter (23) until the charge level of the set of batteries (17) is greater than said threshold value.

5. The management method according to claim 4, ***wherein*** said control power (Pc1, Pc2) is determined (52) based upon load losses (Pe) estimated from measurements (Pre, Peq, Pbat) taken from three probes respectively disposed at the output of said inverter (15), between said voltage converter (23) and said DC voltage and on said DC voltage of said set of batteries (17).
